# EUROPEAN PATENT APPLICATION

(11) **EP 2 756 939 A1**
(43) Date of publication of application: **23.07.2014**
(21) Application number: 14151248.3
(22) Date of filing: 15.01.2014
(51) Int. Cl.: B27M 3/00, B29C 63/00, B29C 65/18

(54) **Edge banding machine**

(30) Priority: 17.01.2013 IT AN20130010
(71) Applicant: TOPLINEA DI NATALI STEFANO & C.S.N.C., 61020 Monteciccardo (PS) (IT)
(72) Inventor: Natali, Stefano, 61010 TAVULLIA (PU) (IT)
(74) Representative: Baldi, Claudio

(57) **Abstract**

An edge banding machine (1) for edging of a semi-finished panel (S) comprises at least one frame (T1, T2) that supports and comprises, in sequential order downstream a coil-holder (4,40), at least one pre-forming unit (41) to shape a finishing band (N) before the latter is applied on at least one groove (3,30) of the semi-finished panel (S), and means for glue application (42) on the groove (3,30) of said semi-finished panel (S).

## Description

The present patent application for industrial invention relates to an improved edge banding machine.

The improved edge banding machine of the invention is used to obtain panels made of different materials (such as chipboard, MDF, coated wood, etc.) with special geometry or dimensions.

Edge banding machines are generally used to apply a coating on a portion of a quadrangular coated wood panel from which a small or large portion has been removed.

Edge banding machines are commonly situated downstream cutting machines used to remove one or more portions of the coated panel by means of counter-rotating toupie groups provided in said cutting machines.

An edge banding machine provides for gluing a finishing band on the side or on the cut section of the panel in order to finish the panel and create a continuous surface coating.

These machines are used in order to create made-to-measure panels or in order to originate grooves on the main sides of the panels; the grooves may have a technical or a merely aesthetic function.

Although several types of edge banding machines are available, this description refers to an edge banding machine used to apply a finishing band on a groove obtained on one of the two main sides of a semi-finished panel.

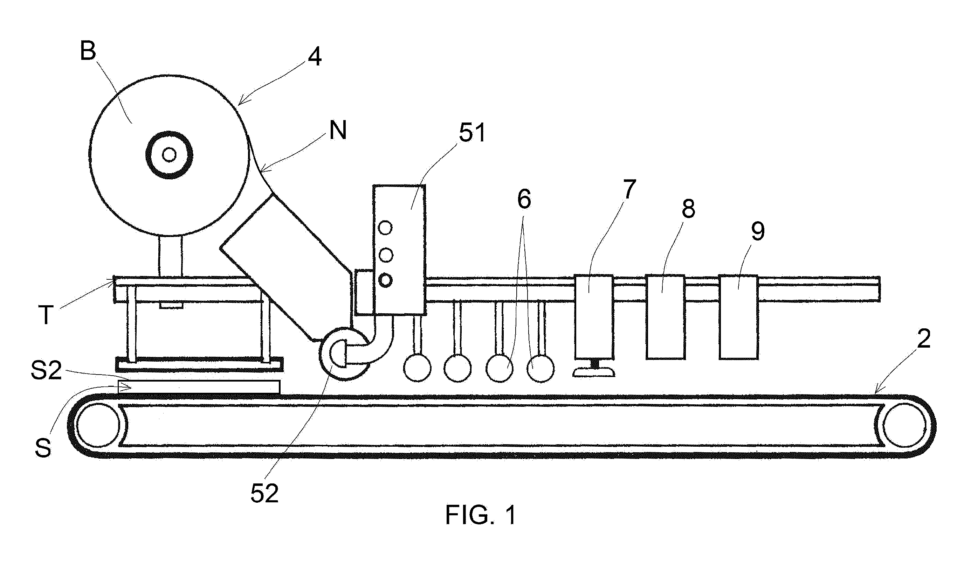

Fig. 1 shows a traditional edge banding machine, which is generally indicated with reference numeral (1).

The traditional edge banding machine (1) comprises a frame (T) and handling means (2) of a semi-finished panel (S) that in this case comprise a conveyor belt (2).

Each semi-finished panel (S) comprises a lower side (S1) adapted to adhere to said conveyor belt (2), and an upper side (S2) faced towards the opposite side.

As mentioned above, the edge banding machine (1) is used to apply a finishing band on a groove (3) obtained on one of the two main sides of a semi-finished panel; consequently, said upper side (S2) of the semi-finished panel (S) is provided with at least one groove (3) obtained by removing material with a cutting machine, on which a finishing band (N) is applied and glued by the edge banding machine (1).

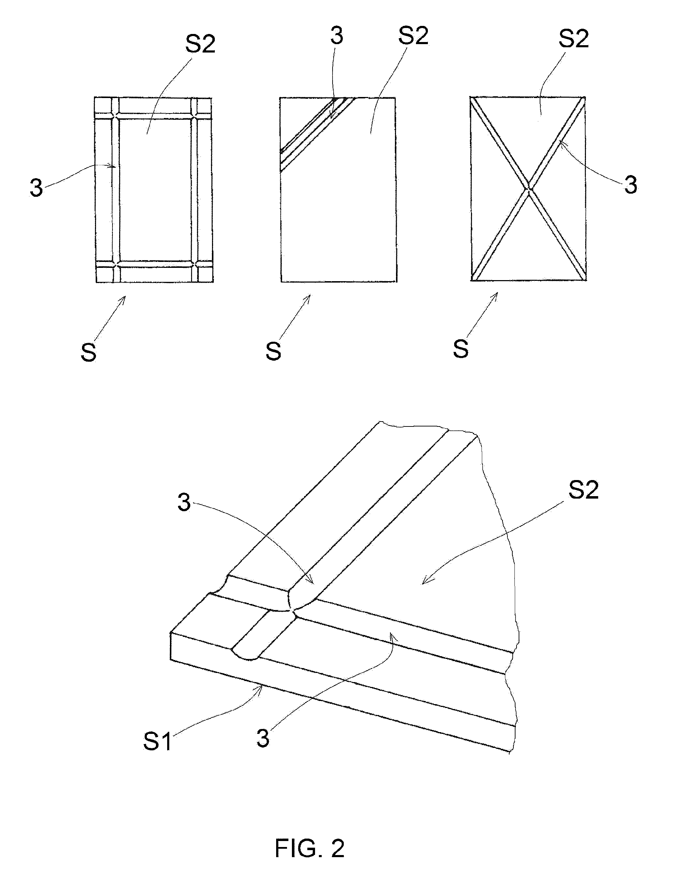

Fig. 2 is a sectional view of some grooves (3) obtained on semi-finished panels (S) with a traditional cutting machine.

The grooves (3) can be rectilinear or oblique and can have a variable length and sectional configuration for different aesthetic reasons.

In the following description the terms "downstream" and "upstream" are defined according to the travelling direction of the semi-finished panel (S) on the conveyor belt (2).

Referring to Fig. 1, the frame (T) of the traditional edge banding machine (1) comprises:
- a coil-holder (4) that supports the finishing band (N), which is wound to form a coil (B) supported by said coil-holder (4);
- means for glue application (51.52) situated downstream said coil-holder (4) and adapted to apply the glue on the finishing band (N); said means for glue application (51,52) are of "roll on" type and comprise a tank (51) for the glue and a roller (52) that is partially wet with said glue and partially comes in contact with the finishing band (N); said tank (51) advantageously comprises means used to heat the glue;
- application means (6) of the finishing band (N) situated downstream said means for glue application (5) and adapted to apply said finishing band (N) on the groove (3) obtained on the upper side (S2) of the semi-finished panel (S); in this case, said application means (6) of the finishing band (N) comprise a series of pressure rollers (6) that press the finishing band (N) on the groove (3) of the semi-finished panel (S) during the forward travel of the semi-finished panel along the conveyor belt (2) in order to guarantee the correct application of the finishing band (N);

- at least one fine-finishing unit (7) situated downstream said application means (6) of the finishing band (N) and adapted to remove any protruding portion of the finishing band (N) with respect to the groove (3) of the semi-finished panel (S);
- at least one glue scraper (8) situated downstream said at least one fine-finishing unit (7) and adapted to remove the glue coming out of the finishing band (N) glued on the groove (3) of the semi-finishing panel (S);
- at least one dryer (9) situated downstream said at least one glue scraper (8) and adapted to dry the glue applied on the finishing band (N) glued on the groove (3) of the semi-finished panel (S) in order to guarantee the long-lasting perfect adhesion of the finishing band (N) on said groove (3).

If the groove (3) is sectionally provided with undercuts, the application of the finishing band (N) on the lateral walls of such a groove with a traditional edge banding machine (1) is an extremely complicated operation.

In this description the term "undercuts" refers to grooves having an opening with lower length than the bottom wall of the groove and/or grooves having at least one angle at the base, comprised between the bottom wall and one of the two lateral walls, with width less than 90°.

The purpose of the present invention is to remedy the drawbacks of the prior art, by devising an edge banding machine able to apply a finishing band on grooves sectionally provided with undercuts.

An additional purpose of the present invention is to devise an edge banding machine that, in addition to achieving the aforementioned purpose, also provides for edging grooves without undercuts.

Another purpose of the present invention is to devise an edge banding machine that comprises a cutting station to remove the material of the semi-finished panel.

The edge banding machine of the invention provides for edging at least one groove obtained on one side of a semi-finished panel comprising a lower side adapted to adhere on a handling means, and an upper side provided with said at least one groove.

The edge banding machine of the invention comprises at least one frame that supports and comprises, in sequential order downstream a coil-holder:
- at least one pre-forming unit used to shape a finishing band before the latter is applied on said at least one groove of the semi-finished panel;
- means for glue application, used to apply the glue on said at least one groove of the semi-finished panel.

Advantageously, said at least one frame of the edge banding machine according to the invention additionally supports and comprises means used to heat said at least one pre-forming unit of said finishing band.

For explanatory reasons, the description of the improved edge banding machine according to the present invention continues with reference to the attached drawings, which only have an illustrative, not limiting value, wherein:
- Fig. 3 is a diagrammatic view of the edge banding machine of the invention according to a first embodiment, which has been devised in order to provide for edge banding of grooves with undercut;
- Fig. 4 is a diagrammatic view of the edge banding machine of the invention according to a second preferred embodiment, which has been devised in order to provide for edge banding of both traditional grooves and grooves with undercut;
- Fig. 5 is a diagrammatic view of a cutting machine situated in series downstream the edge banding machine of the invention;
- Figs. 6 to 8 are sectional views of some types of grooves with undercuts that can be edged with the edge banding machine of the invention;
- Figs. 8 to 13 are sectional views of some types of grooves without undercuts that can be edged with the edge banding machine of the invention.

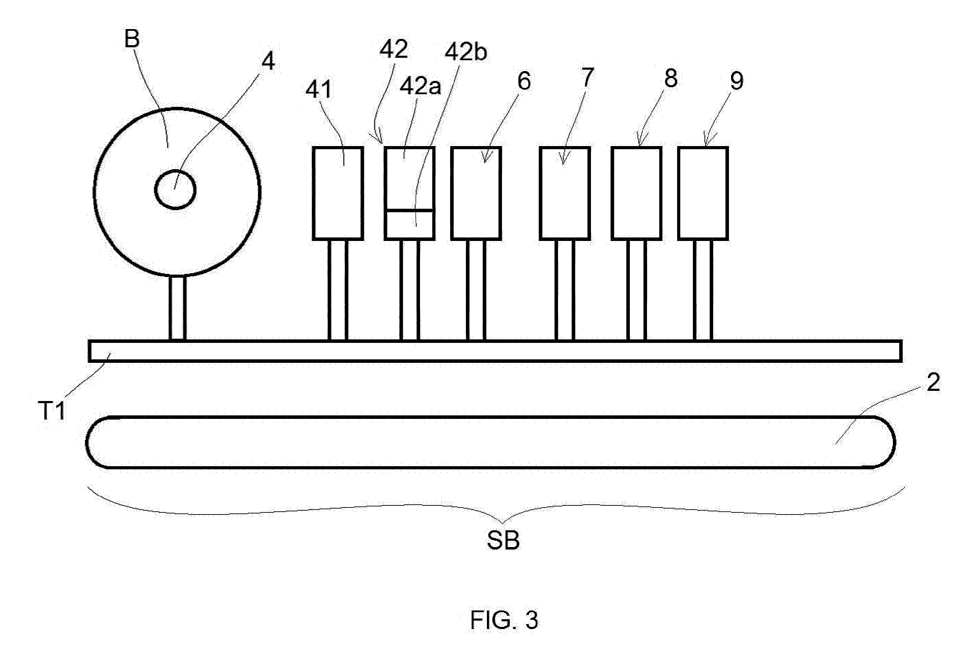

Referring to Fig. 3, the improved edge banding machine of the invention is disclosed, generally indicated with reference numeral (1).

The edge banding machine (1) comprises an edge banding station (SB), two frames (T1, T2), of which a first frame (T1) and a second frame (T2), and handling means (2) of a semi-finished panel (S), which in this case comprise a conveyor belt (2).

In the following description the terms "downstream" and "upstream" are defined according to the travelling direction of the semi-finished panel (S) on the conveyor belt (2).

Each semi-finished panel (S) comprises a lower side (S1) adapted to adhere to said conveyor belt (2), and an upper side (S2) faced towards the opposite side.

In particular, said upper side (S2) of the semi-finished panel (S) is provided with at least one groove (30) with undercuts and/or at least one groove (3) without undercuts, which are obtained by removing material with a cutting machine, on which a finishing band (N) is glued by means of the edge banding machine (1).

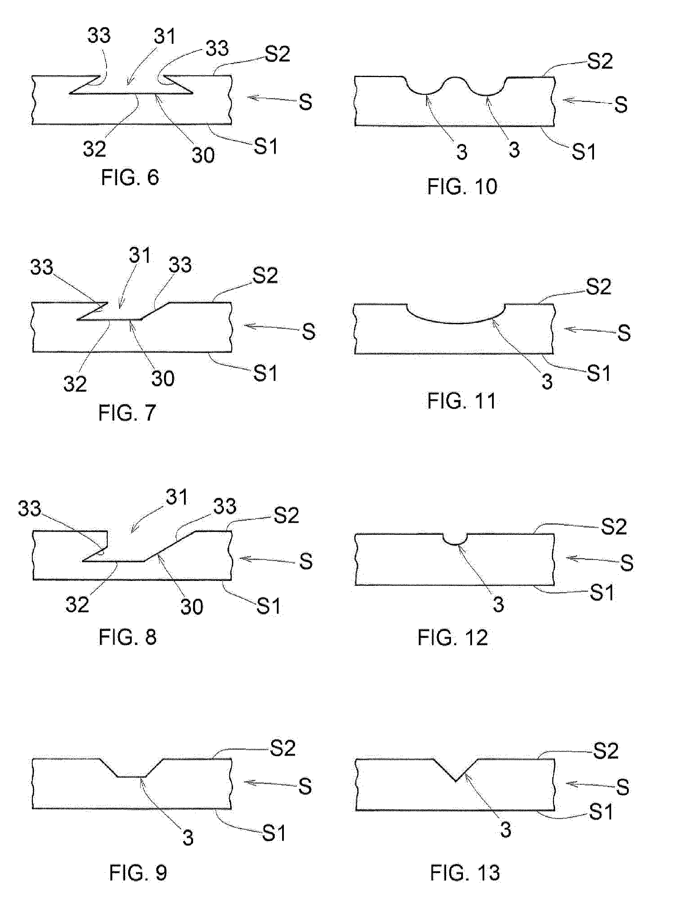

Figs. 6-8 are sectional views of the configuration of grooves (30) with undercuts obtained on the upper side (S2) of the semi-finished panel (S).

Each groove (30) with undercuts sectionally comprises an opening (31) obtained on the upper side (S2) of the semi-finished panel (S), a bottom wall (32) in basically opposite position to said opening (31), and two lateral walls (33).

In this case the opening (31) of each groove (30) with undercuts has a maximum length equal to the length of the bottom wall (32) of the groove and is provided with at least one angle at the base, comprised between the bottom wall (32) and one of said two lateral walls (33), with width less than 90°.

Referring to Fig. 3, the first frame (T1) of the edge banding machine (1) comprises:
- a coil-holder (4) that supports the finishing band (N), which is wound to form a coil (B) supported by said coil-holder (4);
- at least one pre-forming unit (41) of the finishing band (N) situated downstream said coil-holder (4) and used to shape the finishing band (N) before the latter is applied on the groove (30) with undercuts; in such manner, the configuration of the finishing band (N) is such that it can be exactly applied on the lateral walls (33) and the bottom wall (32) of the groove (30) with undercuts;
- means for glue application (42) situated downstream said at least one pre-forming unit (41) of the finishing band (N) and used to apply the glue on the walls (33, 32) of the groove (30) with undercuts; in this case, said means for glue application (42) comprise a tank (42a) that contains the glue and a roller (42b) that is partially wet with said glue and partially comes in contact with the walls (32,33) of the groove (30); said tank (42a) advantageously comprises means used to heat the glue.

Advantageously, said first frame (T1) also comprises means used to heat said at least one pre-forming unit (41) of said finishing band (N).

It must be additionally noted that in case of grooves (30) with undercuts, the glue is applied on the walls (32, 33) of the groove because the application of the glue directly on the finishing band (N) that is unwound from the coil-holder (4) would prevent the hot pre-shaping of the finishing band.

The first frame (T1) of the edge banding machine of the invention can additionally support and comprise, downstream the aforementioned parts:
- application means (6) of the finishing band (N) situated downstream said means for glue application (42) and used to apply said finishing band (N) on the groove (30) obtained on the upper side (S2) of the semi-finished panel (S); more specifically, said application means (6) of the finishing band (N) comprise a series of pressure rollers (6) that press the finishing band (N) on the groove (30) of the semi-finished panel (S) during the forward travel of the semi-finished panel on the conveyor belt (2) in order to guarantee the correct application of the finishing band (N);
- at least one fine-finishing unit (7) situated downstream said application means (6) of the finishing band (N) and used to remove any protruding portion of the finishing band (N) with respect to the groove (30) of the semi-finished panel (S);
- at least one glue scraper (8) situated downstream said at least one fine-finishing unit (7) and used to remove the glue coming out of the finishing band (N) glued on the groove (30) of the semi-finishing panel (S);
- at least one dryer (9) situated downstream said at least one glue scraper (8) and used to dry the glue used to apply the finishing band (N) on the groove (30) of the semi-finished panel (S) in order to guarantee the long-lasting perfect adhesion of said finishing band (N) on said groove (3,30).

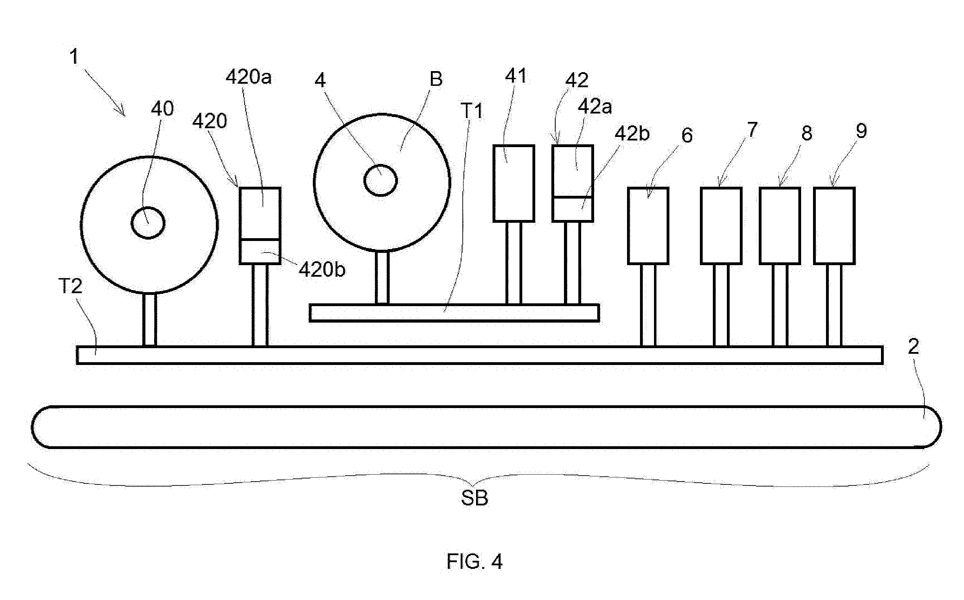

Referring to Fig. 4, according to an alternative embodiment, the edge banding machine of the invention comprises two frames (T1,T2), of which a second fixed frame (T2) that supports all parts (6,7,8,9) necessary to complete edging after applying the finishing band (N) on the groove (3,30) regardless of the fact that it is provided or not with undercuts. Specifically, said parts consist in:
- the application means (6) of the finishing band (N);
   - said at least one fine-finishing unit (7),
   - said at least one glue-scraper (8),
   - said at least one dryer (9).

In such a case, the first frame (T1) is mobile and situated upstream the application means (6); said first frame (T1) comprises:
- a coil-holder (4);
- at least one pre-forming unit (41) of the finishing band (N) situated downstream said coil-holder (4);
- means for glue application (42) situated downstream said at lest one pre-forming unit (41).

Still referring to Fig. 4, the second fixed frame (T2) of the edge banding machine (1) advantageously comprises:
- a coil-holder (40) from which the finishing band (N) applied on the groove (3,30) previously obtained on the upper side (S2) of the semi-finished panel (S) is unwound;
- means for glue application (420) situated downstream said coil-holder (40) and used to apply the glue on the finishing band (N); said means for glue application (420) being of "roll on" type and comprising a tank (420a) that contains the glue and a roller (42b) that is partially wet with said glue and partially comes in contact with the finishing band (N); said tank (420a) advantageously comprises means used to heat the glue.

Said first frame (T1) of the edge banding machine (1) is mobile and connected to said second frame (T2) of the edge banding machine by means of connection means used to move the first frame (T1) closer to or farther from the conveyor belt (2).

More specifically, said connection means allow said first mobile frame (T1) to have two different positions with respect to said conveyor belt (2): a working position, in which said first frame (T1) is closer to said conveyor belt (2), and an idle position, in which said first frame (T1) is remote with respect to said conveyor belt (2); in particular, the first mobile frame (T1) mobile is in said working position when the semi-finished panel (S) is provided with grooves (30) with undercuts on its upper side (S1).

Such an edge banding machine allows for applying the finishing band (N) both on grooves (3) without undercuts and grooves (30) with undercuts.

More precisely, the edging of grooves (3) without undercuts provides for using the second frame (T2) of the edge banding machine (1); in such a case, the first frame (T1) of the edge banding machine (1) is in idle position and remote with respect to the conveyor belt (2).

Vice versa, the edging of grooves (30) with undercuts provides for using the first frame (T1), which is in working position and close to the conveyor belt (2) of the edge banding machine (1).

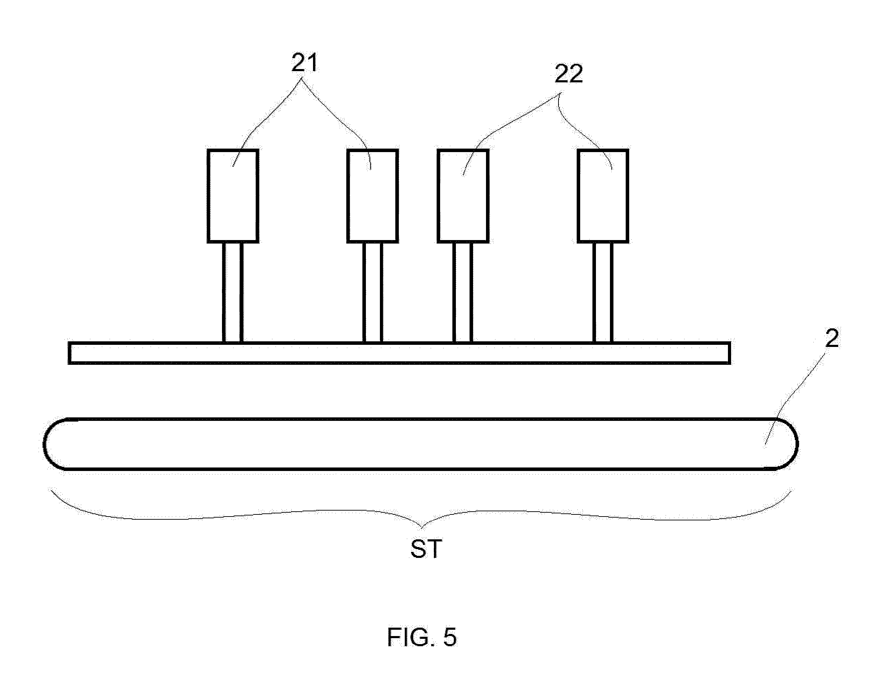

Referring to Fig. 5, the edge banding machine (1) can optionally comprise a cutting station (ST) situated upstream the edge banding station (SB) and provided with handling means of the semi-finished panel (S) to make the semi-finished panel (S) move forward towards said edge banding station (SB).

Therefore the edge banding station (SB) is situated in series and downstream with respect to said cutting station (ST); in other words, the cutting station (ST) and the edge banding station (SB) operatively develop along a common line that basically coincides with the forward-travelling line of the semi-finished panel (S) so that the latter does not need to be repositioned during the passage from the cutting station (ST) to the edge banding station (SB).

Still referring to Fig. 5, said cutting station (ST) comprises at least two counter-rotating timed toupie-groups (21), also defined as molders; advantageously, said cutting station (ST) also comprises at least one milling cutter (22) that rotates with vertical axis and removes the surface coating from the upper side (S2) of the semi-finished panel (S).

The coating portion removed by said at least one milling cutter (22) is coated using the edge banding machine with a finishing band (N) having a different aesthetical finish from the coating of the semi-finished panel (S) in order to obtain a finished panel with an original pattern.

Although it is not shown in the attached diagrammatic figures, the machine of the invention advantageously comprises a locking device for the semi-finished panels (S) that locks the semi-finished panel (S) in a predefined position on the conveyor belt (2).

Moreover, if the machine of the invention also comprises the cutting station (ST), said locking device is adapted to hold the semi-finished panel (S) locked while resting on the conveyor belt (2) and crossing the cutting station (ST) and the edge banding station (SB) in sequence.

## Claims

1. An edge banding machine (1) for the edge banding of a semi-finished panel (S) comprising a lower side (S1) adapted to adhere onto handling means (2), and an upper side (S2) provided with at least one groove (3,30); said edge banding machine (1) comprising said handling means (2), one edge banding station (SB) and at least one frame (T1, T2) that supports and comprises:
- a coil-holder (4,40) adapted to support a finishing band (N) wound to form a coil (B) supported by said coil-holder (4);
- application means (6) of the finishing band (N) to apply said finishing band (N) on said at least one groove (3,30) obtained on the upper side (S2) of the semi-finished panel (S);
- at least one fine-finishing unit (7) downstream said application means (6) of the finishing band (N) to remove any protruding portion of said finishing band (N) with respect to said at least one groove (3,30) of said semi-finished panel (S);
- at least one glue scraper (8) downstream said fine-finishing unit (7) to remove the glue coming out of the finishing band (N) glued on said at least one groove (3,30) of said semi-finishing panel (S);
edge banding machine (1) **characterized in that** said at least one frame (T1, T2) supports and comprises:
- at least one pre-forming unit (41) of said finishing band (N) to shape said finishing band (N) before the latter is applied on said at least one groove (3,30) of said semi-finished panel (S);
- means for glue application (42) on the groove (3,30) of said semi-finished panel (S).

2. The edge banding machine (1) of claim 1, wherein said at least one frame (T1, T2) supports and comprises means adapted to heat said at least one pre-forming unit (41) of said finishing band (N).

3. The edge banding machine (1) of claim 1 or 2, comprising two frames (T1, T2), of which a first mobile frame (T1) and a second fixed frame (T2); said first mobile frame (T1) being adapted to assume two positions, of which:
- a first operating position, wherein said first frame (T1) is close with respect to said handling means (2) of the semi-finished panel (S);
- a second idle position, wherein said first frame (T1) is remote with respect to said handling means (2) of the semi-finished panel (S).

4. The edge banding machine (1) of claim 3, wherein said first mobile frame (T1) supports and comprises:
- - at least one pre-forming unit (41) of said finishing band (N) to shape said finishing band (N) before the latter is applied on said at least one groove (3,30) of said semi-finished panel (S);
- means for glue application (42) on the groove (3,30) of said semi-finished panel (S);
said second fixed frame (T2) comprising:
- a coil-holder (40) to support said finishing band (N) wound to form a coil (B) supported by said coil-holder (4);
- means for glue application (420) on the finishing band (N);
- said application means (6) of the finishing band (N);
- said at least one fine-finishing unit (7) downstream said application means (6) of the finishing band (N);
- said at least one glue scraper (8) downstream said at least one fine-finishing unit (7).

5. The edge banding machine (1) of claim 4, wherein said first mobile frame (T1) supports and comprises a coil-holder (41) to support said finishing band (N) wound to form a coil (B) supported by said coilholder (4).

6. The edge banding machine (1) of any one of the preceding claims, comprising at least one dryer (9) downstream said at least one glue scraper (8) to dry the glue used to apply said finishing band (N) on said at least one groove (3,30) of said semi-finished panel (S).

7. The edge banding machine (1) of any one of the preceding claims, comprising a locking device that locks the semi-finished panel (S) in a predefined position on the conveyor belt (2).

8. The edge banding machine (1) of any one of the preceding claims, comprising a cutting station (ST) upstream the edge banding station (SB); said cutting station (ST) comprising at least two counter-rotating timed toupie-groups (21).

9. The edge banding machine (1) of claim 8, wherein said cutting station (ST) also comprises at least one milling cutter (22) that rotates with vertical axis and removes the surface coating from the upper side (S2) of the semi-finished panel (S).
